# EUROPEAN PATENT APPLICATION

(11) **EP 1 878 954 A1**
(43) Date of publication of application: **16.01.2008**
(21) Application number: 07010193.6
(22) Date of filing: 23.05.2007
(51) Int. Cl.: F16J 15/32, F15B 15/14

(54) **Anticorrosion device for hydraulic cylinder in heavy construction equipment**

(30) Priority: 10.07.2006 KR 20060064476
(71) Applicant: Volvo Construction Equipment Holding Sweden AB, 631 85 Eskilstuna (SE)
(72) Inventor: Jeong, Yoon Hyun, Changwon-si Kyungsangnam-do (KR)
(74) Representative: Schmidt, Sven Hendrik

(57) **Abstract**

In an anticorrosion device of a hydraulic cylinder in which a seal groove (30) partitioned with a plurality of compartments is formed at an inner side of a head cover (14), with a wiper seal (15), a rod seal and a buffer seal being disposed in the groove (30), and a portion between a tube (12) and a rod (13) of a hydraulic cylinder is sealed for thereby preventing the air from inputting from the space into the interior of the tube, there is provided an anticorrosion device of a hydraulic cylinder which comprises a seal member (15) which is mounted on a groove (30a) near the space among the compartments and slides along an outer surface of the rod (13); and a packing ring (40) which is elastically and closely contacted with an outer side of the seal member (15) for sealing the groove (30a).

## Description

### CROSS-REFERENCE TO RELATED APPLICATION

This application is based on and claims priority from Korean Patent Application No. 10-2006-64476, filed on July 10, 2006 in the Korean Intellectual Property Office, the disclosure of which is incorporated herein in its entirety by reference.

### BACKGROUND OF THE INVENTION

### 1. Field of the Invention

The present invention relates to an anticorrosion device for a hydraulic cylinder in heavy construction equipment, and in particular to an improved anticorrosion device for a hydraulic cylinder in heavy construction equipment in which a packing state is reliably kept in a groove of a head cover seal even when a rod reciprocates for long time, so that corrosion and oxidation do not occur at a rod contact surface in the interior of the hydraulic cylinder and in a seal groove.

### 2. Description of the Background Art

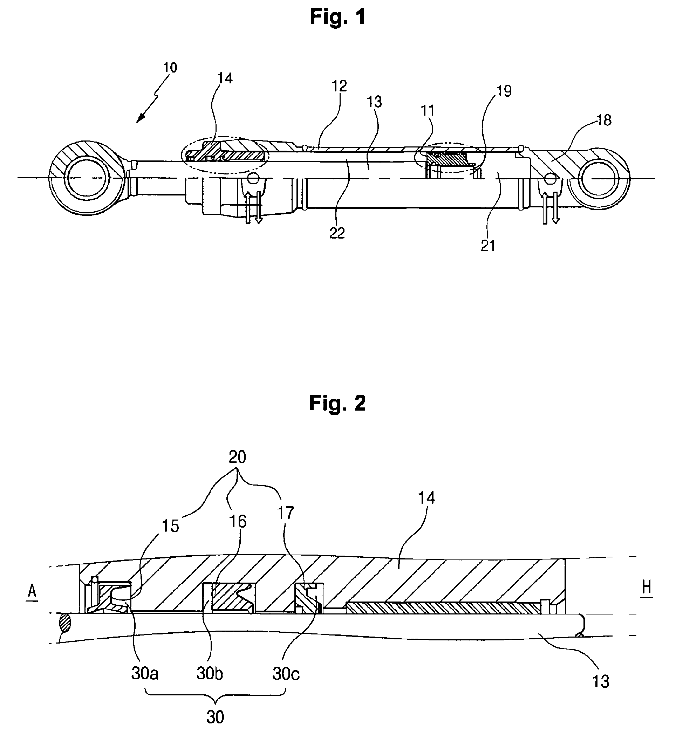

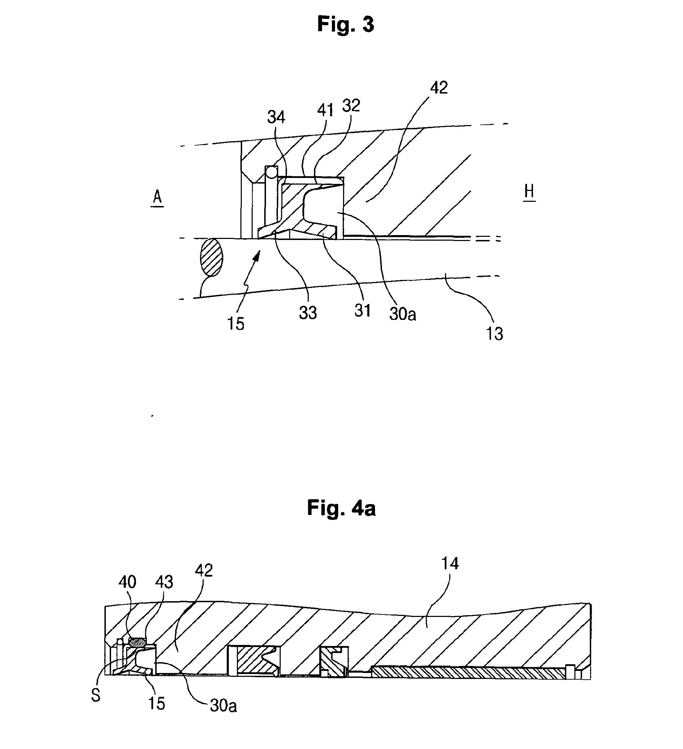

Figure 1 is a cross sectional side view illustrating a conventional hydraulic cylinder, and Figure 2 is an enlarged view illustrating a head cover of a hydraulic cylinder of Figure 1, and Figure 3 is an enlarged view illustrating a wiper seal engaged in a groove near a head cover of Figure 1.

As shown in the above drawings, a hydraulic cylinder 10, which is used for heavy construction equipment such as an excavator, comprises a head cover 14 and a cover end 18 at left and right sides of a tube 12. A piston 19 and a rod 13, which reciprocate, are further provided in the tube 12.

A certain pressure is formed in the interior of the tube 12 as compressed or non-compressed hydraulic fluid discharged from a hydraulic pump and a compressor(not shown) flows via a switch valve. When hydraulic fluid flows into a large chamber 21 via the tube 12, the rod 13 is extended outside the tube 12. When the hydraulic fluid flows into a small chamber 22, the rod 13 is forced to move into the interior of the tube 12.

Generally, the piston 19 is equipped with a piston sealing part 11 consisting of a piston seal, a wear ring, a pollution prevention seal, etc. so that the large chamber 21 and the small chamber do not communicate with each other. Seal members 20 consisting of a wiper seal 15, a rod seal 16 and a buffer seal 17 are sequentially installed in the seal groove 30 consisting of compartments 30a, 30b and 30c, with the seal members 20 being designed so that hydraulic fluid does not leak between the space outside the tube 12 and the hydraulic fluid side in the small chamber 22 when the rod 13 reciprocates.

In particular, a wiper seal 15 is installed in the groove 30a in a rib structure. Since the wiper seal 15 is installed most near the space A in the seal member 20 of the head cover 14, it should have a function of sealing with respect to the hydraulic fluid side H in the seal groove 30 and a function for preventing external foreign substance from being input.

According to the rib structure of the wiper seal 15, rib parts 31 and 32 and hill portions 33 and 34 are provided at the outer portions of the upper and lower sides of each wiper seal 15. When it is engaged in the groove 30a, the rib part 31 and the hill portion 33 are first transformed and contact with the outer surface of the rod 13. The rib part 31 and the hill portion 33 of the inner side as well as the rib part 32 and the hill portion 34 of the outer side are together transformed in the course of the reciprocation of the rod 13, so that they closely contact with the surfaces of the rod 13 and the groove 30a.

So, a sealing reliability at the contact surfaces of the wiper seal 15, the groove 30a and the rod 13 is determined depending on a contact pressure distribution on the rib parts 31 and 32 and the hill portions 33 and 34.

When a sliding and contact surface of the wiper seal 15, namely, a contact surface area of the wiper seal 15 with respect to the rod 13 and the outer surface is made larger so as to enhance a sealing reliability, the friction resistance of the wiper seal 15 increases, and the service life of the product decreases along with the friction heat. It is needed to make the contact surface area of the wiper seal 15 smaller so as to decrease the friction resistance and friction heat. In this case, sealing reliability is relatively worsened.

Since the conventional hydraulic cylinder is designed in consideration with a compression and transformation of the rib parts in the groove near the space A outside the tube so that a proper sealing reliability is obtained when the rod reciprocates, the rib parts needs a V shaped or U shaped wiper seal. The rib parts and hill portions are packed between the upper sides of the grooves based on their compression and transformation, and the rib parts and hill portions formed at the outer surfaces perform uniform sliding operations on the outer surface of the rod.

However, in case of conventional hydraulic cylinder, the foreign substances attached on the outer surface of the rod are removed from the sliding surfaces of the rib parts of the wiper seal. However, when it is exposed to worse external environment owing to the outdoor work of heavy construction equipment, the packing force of the rib parts in the groove of the head cover may be weak, and the sealing reliability in the groove may be weak as well. Moisture or salt components contained in the air may be inputted into the tube or the small chamber from the space outside the tube.

The components inputted from the space A may cause oxidation and corrosion of the inner side of the groove of the head cover and the interior of the tube. In worse case, a lubrication membrane of the rod may be damaged, so that the durability of the hydraulic cylinder is worsened.

### SUMMARY OF THE INVENTION

Accordingly, it is an object of the present invention to provide an anticorrosion device for a hydraulic cylinder which is able to prevent oxidation and corrosion of the inner sides of a groove and tube so that moisture and salt components are not inputted into the interiors of the groove and tube of a head cover from the space of the tube of the hydraulic cylinder.

It is another object of the present invention to provide an anticorrosion device for a hydraulic cylinder in which air paths formed in the interior of a groove are substantially narrowed by providing a reliable sealing state between a packing member and a seal member in the groove.

To achieve the above objects, in an anticorrosion device of a hydraulic cylinder in which a seal groove partitioned with a plurality of compartments is formed at an inner side of a head cover, with a wiper seal, a rod seal and a buffer seal being disposed in the groove, and a portion between a tube and a rod of a hydraulic cylinder is sealed for thereby preventing the air from inputting from the space into the interior of a tube, there is provided an anticorrosion device of a hydraulic cylinder which comprises a seal member which is mounted on a groove near the space among the compartments and slides along an outer surface of the rod; and a packing ring which is elastically and closely contacted with an outer side of the seal member for sealing the groove.

The packing ring is elastically and closely installed at an upper side of the seal member for thereby sealing the groove.

A groove is formed at an upper side of the groove, and a packing ring is mounted on the groove, so that the upper side of the seal member is elastically and closely supported.

A groove is formed at a lateral wall of the groove, and the packing ring is mounted on the groove, so that the upper side of the seal member is elastically and closely supported.

The packing ring is elastically mounted on an upper side of the rib part of the inner side of the seal member.

The packing ring is integrally formed between the rib part and the hill portion of an outer side of the sealing member.

A coating layer is further formed in the interior of the groove, and the packing ring is compression-installed between the coating layer and the seal member for thereby sealing the interior of the groove.

### BRIEF DESCRIPTION OF THE DRAWINGS

The present invention will become better understood with reference to the accompanying drawings which are given only by way of illustration and thus are not limitative of the present invention, wherein;
Figure 1 is a cross sectional side view illustrating a conventional hydraulic cylinder;
Figure 2 is an enlarged view illustrating a head cover of a hydraulic cylinder of Figure 1;
Figure 3 is an enlarged view illustrating a wiper seal engaged in a groove near a head cover of Figure 1;
Figures 4A and 4B are views illustrating an inner anticorrosion device for a hydraulic cylinder according to an embodiment of the present invention, of which Figure 4A is a cross sectional view illustrating a head cover in which a packing ring is installed at an upper side of a groove, and Figure 4B is a cross sectional view illustrating a head cover in which a packing ring is installed at a lateral wall of a groove;
Figure 5 is a cross sectional view illustrating a state that a packing ring and a wiper seal are engaged according to another embodiment of the present invention;
Figures 6A and 6B are cross sectional views illustrating a state that a wiper seal is integrally engaged according to further another embodiment of the present invention; and
Figure 7 is a cross sectional view illustrating a head cover in which a coating layer is formed in the interior of a groove according to further another embodiment of the present invention.

### DETAILED DESCRIPTION OF THE PREFERRED EMBODIMENTS

The preferred embodiments of the present invention will be described with reference to the accompanying drawings.

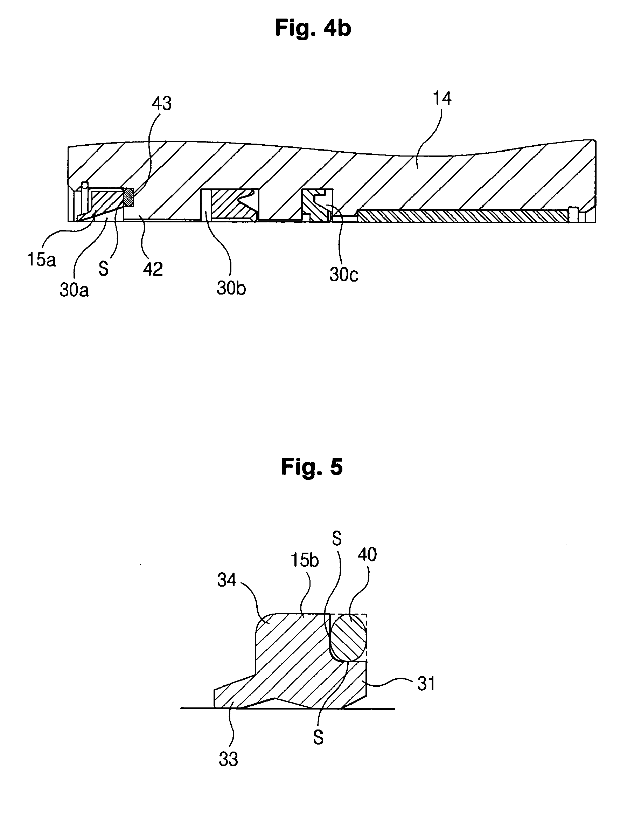

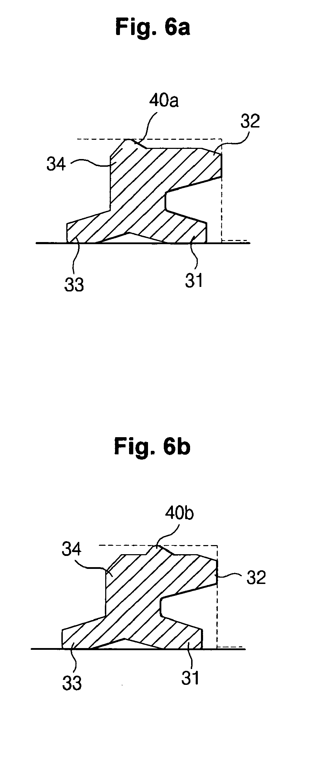

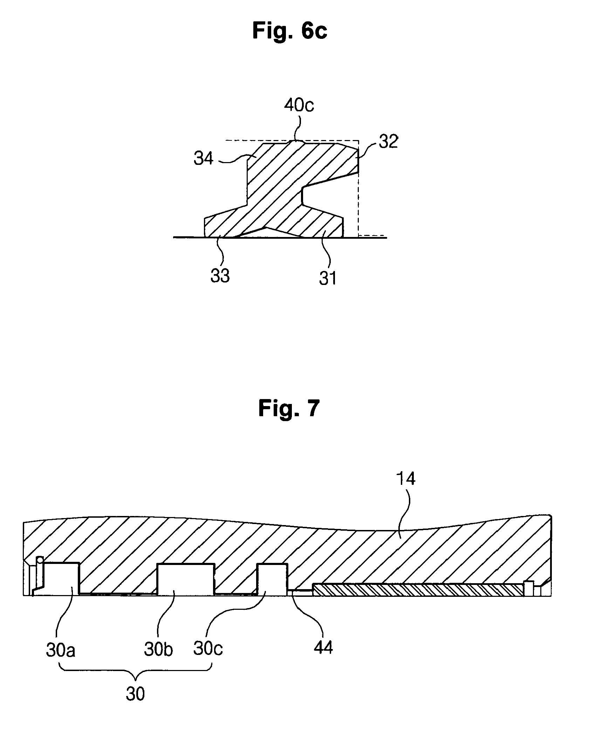

Figures 4A and 4B are views illustrating an inner anticorrosion device for a hydraulic cylinder according to an embodiment of the present invention, of which Figure 4A is a cross sectional view illustrating a head cover in which a packing ring is installed at an upper side of a groove, and Figure 4B is a cross sectional view illustrating a head cover in which a packing ring is installed at a lateral wall of a groove. Figure 5 is a cross sectional view illustrating a state that a packing ring and a wiper seal are engaged according to another embodiment of the present invention. Figures 6A and 6B are cross sectional views illustrating a state that a wiper seal is integrally engaged according to further another embodiment of the present invention. Figure 7 is a cross sectional view illustrating a head cover in which a coating layer is formed in the interior of a groove according to further another embodiment of the present invention.

As shown in Figures 4A through 7, a seal member 15 is provided as an illustrative purpose for describing an installation state of a wiper seal engaged at a hydraulic cylinder for better understanding the present invention.

According to the anticorrosion device of a hydraulic cylinder of the present invention, in an anticorrosion device of a hydraulic cylinder in which a seal groove 30 partitioned with a plurality of compartments 30a, 30b and 30c is formed at an inner side of a head cover 14, a rod seal 16 and a buffer seal 17 being disposed in the groove 30, and a portion between a tube 12 and a rod 13 of a hydraulic cylinder is sealed for thereby preventing the air from inputting from the space A into the interior of a tube 12, there is provided an anticorrosion device of a hydraulic cylinder which comprises a seal member 15 which is mounted on a groove 30a near the space A among the compartments 30a, 30b and 30c and slides along an outer surface of the rod 13, and a packing ring 40 which is elastically and closely contacted with an outer side of the seal member 15 for sealing the groove 30a.

Preferably, the packing ring 40 is elastically and closely installed at an upper side of the seal member 15 for thereby sealing the groove 30a.

According to an embodiment of the present invention, as shown in Figure 4, a groove 43 is formed at an upper side 41 of the groove 30a, and a packing ring 40 is mounted on the groove 43, so that the upper side of the seal member 15 is elastically and closely supported.

A groove 43 is formed at a lateral wall 42 of the groove 30a, and the packing ring 40 is mounted on the groove 43, so that the upper side of the seal member 15 is elastically and closely supported.

The packing ring 40 and the seal member 15 are supported with each other in the groove 30a and form a compression surface S. The input of air is blocked between the space A and the interior of the tube 102 in the groove.

In the present invention, the compression surface S of the packing ring 40 is designed to block a small gap between the space A and the interior of the tube 12 so that the packing ring 40 is tightly and elastically contacted with the rib parts 31 and 32 of the seal member 15 in consideration with the structures of the rib parts and hill portions in which the seal member 15 is transformed when the rod 103 reciprocates in the seal groove 30 near the space A outside the tube 12.

According to another embodiment of the present invention, as shown in Figure 5, the packing ring 40 is installed on the upper side of the rib part 31 of the outer surface of the seal member 15b.

In this case, the packing ring 40 is provided for sealing a gap between the upper side of the rib part 31 of the outer surface of the seal member 15b and the lateral wall 42 of the groove 30a, so that moisture and salt components may be prevented from inputting into the tube 12.

As shown in Figure 6, according to another embodiment of the present invention, the packing rings 40a, 40b and 40c may be preferably integrally formed with the rib part 32 and the hill portion 34 near the upper side of the groove 30a and may be preferably formed in circular shapes or rectangular shapes which correspond to the cross section shape of the groove 30a and the gap between the seal member 15 and the groove 30a.

According to further another embodiment of the present invention, a corrosion prevention coating layer 44 is further formed in the interior of a seal groove 30. The packing ring 40 is installed and compressed between the coating layer 44 and the seal member 15 in the interior of the seal groove 30 for thereby substantially sealing the interior of the seal groove 30. So, moisture and salt components generating between the space A and the tube 102 do not input.

The coating layer 44 is formed by coating resins such as anticorrosion spray or fluorine resin, coating resin in the interior of the seal groove 30.

Preferably, the coating layer 44 is formed by a zinc nickel coating, a phosphate coating, a chrome coating, a zinc coating or a dacro coating, etc.

According to the present invention, when the coating layer 44 is formed, a dacro process liquid is made with special metallic zinc flake for the dacro coating method. The head cover 14 having a seal groove 30 is precipitated in the dacro process liquid and is dried at about 320°C using a drying furnace. Zinc flake is formed on the surface of the seal groove 30, so that a dacro coating layer 44 of about 6~10 µ*m* is formed.

Here, the coating layer 44 seals the interior of the seal groove 30 and allows micro components such as moisture or salt ingredients not to pass the groove 30a when moisture or salt ingredients are inputted from the space A into the hydraulic cylinder 10 or the tube 102.

The operation and effects of the anticorrosion device of a hydraulic cylinder according to the present invention will be described.

When the rod 13 of the hydraulic cylinder reciprocates, the wiper seal is basically designed to prevent the input of foreign substances with the help of a rib structure formed at the upper and lower sides. However, lots of moisture and salt components are inputted via the very small gaps of the seal groove 30 in the head cover 14, namely, the very small gaps communicating the space A and the interior of the tube 12, and are attached on each part of the hydraulic cylinder.

According to the anticorrosion device for a hydraulic cylinder, when the seal member 15 such as a wiper seal, etc. is engaged at the groove 30a near the aid side A, since the packing ring 40 and the seal member 15 are closely contacted with each other in the groove 30a, moisture or salt components can not input between the space A and the interior of the tube 102 in the seal groove.

According to the above embodiments of the present invention, the packing ring 40 is elastically and closely contacted with the rib parts 31 and 32 of the seal member 15 in consideration with the structure of the rib parts and hill portions in which the seal member 15 is compressed and transformed when the rod 103 reciprocates in the groove 30a near the space A outside the tube 12, so that the compression surface S seals the groove 30a. So, corrosion components such as moisture and salt ingredients do not input from the space A into the interior of the tube 12 via the seal groove 30.

In the anticorrosion device of a hydraulic cylinder according to another embodiment of the present invention, a coating layer 44 is formed in the interior of the seal groove 30, and the packing ring 40 and the seal members 15a and 15b are engaged. In this case, a reliable sealing state is first obtained in the groove 30a. Since the compression surface S is formed between the seal members 15a and 15b and the packing ring 40, the sealed state is further sealed in the seal groove 30.

In this case, the packing ring 40 allows the gaps between the rib parts 31 of the seal members 15a and 15b and the upper side of the groove 30a or the lateral wall 42 to be more reliably sealed, so that moisture or salt components do not input from the space A into the interior of the tube 12 via the gaps of the seal member 30. So, it is possible to prevent the corrosion and oxidation phenomenon of the inner sides of the seal groove 30 and the tube 12 as well as the hydraulic cylinder.

As described above, according to the anticorrosion device for a hydraulic cylinder of the present invention, the seal member and the rib parts of the seal member are compressed and supported with each other in the interior of the groove near the space A of the tube of the hydraulic cylinder for thereby reliably sealing the groove, moisture or salt components can be substantially prevented from inputting from the space A into the interior of the tube. So, it is possible to prevent corrosion and oxidation of the groove and the interior of the tube of the hydraulic cylinder.

In addition, according to the anticorrosion device for a hydraulic cylinder of the present invention, since the packing ring tightly compressed and supports the seal member at the coating layer in the groove, a sealing reliability is more enhanced in the interior of the groove.

As the present invention may be embodied in several forms without departing from the spirit or essential characteristics thereof, it should also be understood that the above-described examples are not limited by any of the details of the foregoing description, unless otherwise specified, but rather should be constructed broadly within its spirit and scope as defined in the appended claims, and therefore all changes and modifications that fall within the meets and bounds of the claims, or equivalences of such meets and bounds are therefore intended to be embraced by the appended claims.

## Claims

1. In an anticorrosion device of a hydraulic cylinder in which a seal groove partitioned with a plurality of compartments is formed at an inner side of a head cover, with a wiper seal, a rod seal and a buffer seal being disposed in the groove, and a portion between a tube and a rod of a hydraulic cylinder is sealed for thereby preventing the air from inputting from the space into the interior of a tube, an anticorrosion device of a hydraulic cylinder, comprising:
a seal member which is mounted on a groove near the space among the compartments and slides along an outer surface of the rod; and
a packing ring which is elastically and closely contacted with an outer side of the seal member for sealing the groove.

2. The device of claim 1, wherein said packing ring is elastically and closely installed at an upper side of the seal member for thereby sealing the groove.

3. The device of claim 2, wherein a groove is formed at an upper side of the groove, and a packing ring is mounted on the groove, so that the upper side of the seal member is elastically and closely supported.

4. The device of claim 2, wherein a groove is formed at a lateral wall of the groove, and the packing ring is mounted on the groove, so that the upper side of the seal member is elastically and closely supported.

5. The device of claim 2, wherein said packing ring is elastically mounted on an upper side of the rib part of the inner side of the seal member.

6. The device of claim 2, wherein said packing ring is integrally formed between the rib part and the hill portion of an outer side of the sealing member.

7. The device of one among claims 1 through 6, wherein a coating layer is further formed in the interior of the groove, and the packing ring is compression-installed between the coating layer and the seal member for thereby sealing the interior of the groove.
